(19) Europäisches Patentamt
European Patent Office
Office européen des brevets

(11) **EP 0 985 916 B1**

(12) **EUROPÄISCHE PATENTSCHRIFT**

(45) Veröffentlichungstag und Bekanntmachung des Hinweises auf die Patenterteilung:
**18.07.2007 Patentblatt 2007/29**

(51) Int Cl.:
**_G01F 23/296_** _(2006.01)_

(21) Anmeldenummer: **98117077.2**

(22) Anmeldetag: **09.09.1998**

(54) **Vorrichtung zur Feststellung und/oder Überwachung eines vorbestimmten Füllstandes in einem Behälter**

Device for detecting and/or monitoring a predetermined level in a container

Dispositif de détection et/ou de surveillance d'un niveau prédéterminé dans un réservoir

(84) Benannte Vertragsstaaten:
**CH DE FR GB IT LI NL**

(43) Veröffentlichungstag der Anmeldung:
**15.03.2000 Patentblatt 2000/11**

(73) Patentinhaber: **Endress + Hauser GmbH + Co. KG**
**79689 Maulburg (DE)**

(72) Erfinder:
• **Lopatin,Sergej DR.**
**79539 Lörrach (DE)**
• **Pfeiffer,Helmut**
**79585 Steinen (DE)**
• **Müller,Alexander**
**79585 Steinen (DE)**
• **Dreyer,Volker**
**79541 Lörrach (DE)**
• **Brutschin,Wolfgang**
**79650 Schopfheim (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
EP-A- 0 875 739          EP-A- 0 875 742
DE-A- 1 498 548          DE-A- 4 419 617
DE-C- 19 523 461         GB-A- 1 512 233
GB-A- 2 054 853          GB-A- 2 185 575

**Beschreibung**

Die Erfindung betrifft eine Vorrichtung zur Feststellung und/oder Überwachung eines vorbestimmten Füllstandes in einem Behälter.

Im Stand der Technik sind Vorrichtungen beschrieben, welche ein an einer Membran befestigtes in den Behälter ragendes Schwingelement aufweisen. Als Schwingelement können z.B. ein, zwei oder mehr an der Membran befestigte Schwingstäbe dienen. Die Membran wird mittels eines elektromechanischen Wandlers in Schwingungen versetzt und die resultierenden Schwingungen werden aufgenommen und in ein elektrisches Empfangssignal umgewandelt. Aufgrund der Schwingung der Membran führt das Schwingelement Schwingungen aus. Wenn im eingebauten Zustand das Schwingelement mit einem in dem Behälter angeordneten Füllgut bedeckt sind, so ist dessen Schwingung gedämpft. Es ändert sich die Schwingungsfrequenz der Vorrichtung und die Schwingungsamplitude des Schwingelements. Ein elektrisches Empfangssignal wird einer Auswerte-Elektronik zugeführt und ausgewertet. Ein Absinken der Schwingungsfrequenz und/oder der Schwingungsamplitude unter einen festgesetzten Referenzwert wird von einer nachgeschalteten Auswerte-Elektronik erkannt und zur Anzeige gebracht und/oder zur Auslösung eines Schaltvorgangs verwendet.

Derartige Vorrichtungen werden in einer Vielzahl von Industrien eingesetzt. Sie werden z.B. in der Chemie, in der Lebensmittelindustrie oder im Bereich der Wasseraufbereitung als Füllstandsgrenzwertdetektoren eingesetzt. Dabei können sie z.B. als Überfüllsicherung oder als Pumpenleerlaufschutz dienen. Die Bandbreite der Füllgüter, in die eine solche Vorrichtung im Betrieb eintauchen kann, reicht von Wasser über Yoghurt, Farben und Lacken bis zu hochviskosen Füllgütern wie Honig oder stark schäumenden Füllgütern wie z.B. Bier.

In der DE-A 44 19 617 ist eine Vorrichtung zur Feststellung und/oder Überwachung eines vorbestimmten Füllstandes beschrieben, welche Vorrichtung umfaßt:

- ein Gehäuse,
- zwei in den Behälter ragende Schwingstäbe,
- eine an ihrem Rand fest in das Gehäuse eingespannte Membran,

  -- an der die Schwingstäbe voneinander beabstandet befestigt sind,

- einen auf der Membran angeordneten piezoelektrischen Erregungswandler zur Anregung der Membran zu Schwingungen, und
- einen auf der Membran angeordneten piezoelektrischen Empfangswandler zum Empfangen und Umwandeln von deren Schwingungen in ein elektrisches Empfangssignal,
- wobei die Schwingungen der Membran die Schwingstäbe in gegensinnige Schwingungen quer zu ihrer Längsachse versetzen.

Bei dieser Vorrichtung ist eine Rückkopplungsschaltung vorgesehen, die einen Eingangsverstärker, einen zu dem Eingangsverstärker in Serie geschalteten Phasenschieber und einen zu dem Phasenschieber in Serie geschalteten Endverstärker aufweist. Am Eingang der Rückkopplungsschaltung liegt im Betrieb ein vom Empfangswandler aufgenommenes Empfangssignal an und ein Ausgangssignal dieser Rückkopplungsschaltung liegt am Erregungswandler an.

Bei dieser Vorrichtung handelt es sich um ein komplexes Schwingungssystem, das sich aus einem mechanischen Schwingungsgebilde, einem elektromechanischen Wandler und der Rückkopplungsschaltung zusammensetzt. Die einzelnen Komponenten sind nicht vollständig elektrisch und mechanisch voneinander getrennt. Es treten sowohl elektrische als auch mechanische Kopplungen auf.

Folglich umfaßt das Empfangssignal nicht nur das gewünschte Meßsignal, das auf die Schwingung des jeweiligen mechanischen Schwingungsgebildes zurückgeht, sondern auch zusätzliche Signale, die durch die vorgenannten Kopplungen entstehen.

Bisher war es nicht möglich derartige Vorrichtungen auch für Messungen in hochviskosen Medien und in wasserhaltigen oder zähen Schäumen einzusetzen. Wenn die vorgenommenen Vorabeinstellungen so gewählt waren, daß die Vorrichtung in der einen diese Anwendungen einwandfrei arbeitete, traten bei der anderen Anwendung Probleme z.B. derart, daß bei einer der Anwendungen eine zuverlässige Anregung des mechanischen Schwingungsgebildes zu Schwingungen nicht gewährleistet werden konnte.

Die Phasendifferenz die der Phasenschieber erzeugt entspricht z.B. der Resonanz des Systems wenn das Schwingungsgebilde in Luft schwingt. Reduziert sich die Schwingungsgüte des Systems jedoch aus irgendeinem Grund, so hat dies zur Folge, daß dieser feste Wert der Phasendifferenz nicht mehr existiert. Es gibt keine Frequenz bei der das mechanische Schwingungsgebilde Schwingungen mit einer von null verschiedenen Amplitude ausführt und die Phasendifferenz diesen festen Wert aufweist. Diese Phasendifferenz kann durch die Rückkopplungschaltung nicht eingestellt werden. Es tritt somit eine Fehlfunktion auf.

Eine Reduktion der Schwingungsgüte tritt z.B. dann auf, wenn die Bewegung des mechanischen Schwingungsgebildes gedämpft wird, z.B. indem es in ein viskoses Medium oder in flüssigkeitshaltigen oder zähen Schaum eingetaucht ist.

In der Europäischen Patentanmeldung Nr. 97107152.7 ist eine Vorrichtung zur Feststellung und/oder Überwachung eines vorbestimmten Füllstandes in einem Behälter beschrieben, welche Vorrichtung umfaßt:

- ein Gehäuse,
- zwei in den Behälter ragende Schwingstäbe,
- eine an ihrem Rand fest in das Gehäuse eingespannte Membran,

  -- an der die Schwingstäbe voneinander beabstandet befestigt sind,

- ein einziges auf der Membran angeordnetes scheibenförmiges piezoelektrisches Element zur Anregung der Membran zu Schwingungen und zum Empfangen und Umwandeln von deren Schwingungen in ein elektrisches Empfangssignal,

  -- auf dem zwei formgleiche Elektroden symmetrisch zu einer in einer Membranebene liegenden Achse angeordnet sind,

- wobei die Schwingungen der Membran die Schwingstäbe in gegensinnige Schwingungen quer zu ihrer Längsachse versetzen.

Die beiden formgleichen Elektroden sind ein erster und ein zweiter Empfänger. Zwischen dem ersten und dem zweiten Empfänger ist eine weitere Elektrode angeordnet, die als Sender dient. Das piezoelektrische Element weist drei jeweils von einer der drei Elektroden überdeckte Zonen auf. Eine erste vom ersten Empfänger überdeckte Zone weist eine Polarisationsrichtung auf, die parallel zu einer Flächennormale auf das piezoelektrische Element verläuft, die beiden anderen Zonen weisen eine Polarisationsrichtung auf, die der Polarisationsrichtung der ersten Zone entgegengerichtet ist. Um die Vorrichtung zu Schwingungen bei deren Resonanz anzuregen wird eine Differenz von einem mit dem ersten und einem mit dem zweiten Empfänger aufgenommenen Signal gebildet, ein der Differenz entsprechendes Signal gebildet und um einen konstanten sensorspezifischen Betrag phasenverschoben und es wird das phasenverschobene Signal an den Sender angelegt. Aufgrund der unterschiedlichen Polarisationsrichtungen der einzelnen Zonen ist es dabei entscheidend, welches Signal von welchem abgezogen wird. Ein versehentliches Vertauschen der elektrischen Anschlüsse des ersten und des zweiten Empfängers führt zu einer nicht funktionsfähigen Vorrichtung. Bei der Herstellung einer solchen Vorrichtung muß mit großer Sorgfalt gearbeitet werden. Es müssen aufgrund der Zonen unterschiedlicher Polarisationsrichtung aufwendige piezoelektrische Elemente eingesetzt werden, es muß beim Herstellungsprozeß zwischen den Zonen unterschiedlicher Polarisation unterschieden werden und es müssen die beiden formgleichen Empfänger unterschieden und korrekt angeschlossen werden. Dies bedeutet einen hohen zusätzlichen Aufwand und birgt Fehlerquellen.

Im Dokument GB 1 512..233 wird ein Füllstandssensor beschrieben, welcher ein Metallrohr aufweist, in dessen dem Medium zugewandten Ende ein piezoelektrisches Bauelement angebracht ist. An den beiden Seitenflächen des piezoelektrischen Bauelements ist jeweils eine Elektrode angeordnet. Der Füllstand des Mediums wird überwacht, indem die Impedanz des piezoelektrischen Bauelements ausgewertet wird.

Das Dokument DE 195 23 461 beschreibt eine Schwinggabel mit zwei Membranen, wobei die Schwingstäbe, an einer ersten Membran befestigt sind. Ein scheiben- oder ringscheibenförmiges piezoelektrisches Element ist auf der zweiten Membran angeordnet und regt diese zu Biegeschwingungen an. Die Schwingungen der zweiten Membran werden über Befestigungsmittel direkt auf die erste Membran übertragen, so dass die Schwingstäbe gegensinnige Schwingungen quer zur Längsachse durchrühren. Auf der von der Membran abgewandten Seite des piezoelektrischen Elements sind zwei Elektroden angeordnet, wobei eine zur Schwingungserzeugung und die andere zum Empfang dient. Eine Elektrode weist die Form eines überstumpfwinkligen Kreisringsegments und die andere die Form eines spitzwinkligen Kreissegments auf.

Es ist eine Aufgabe der Erfindung, eine Vorrichtung zur Feststellung und/oder Überwachung eines vorbestimmten Füllstandes in einem Behälter anzugeben, die in einem weiten Anwendungsbereich, d.h. in vielen verschiedenen Medien, einsetzbar ist.

Durch den aufgabengemäß großen Anwendungsbereich ist es möglich die Vorrichtung in großen Stückzahlen abzusetzen. Hierzu ist es von besonderem Vorteil, wenn die Vorrichtung einfach aufgebaut ist und mit geringem Aufwand herstellbar ist.

Diese Aufgabe wird gelöst durch eine Vorrichtung mit den Merkmalen des Anspruchs 1.

Gemäß einer weiteren Ausgestaltung ist zwischen der Membran und dem piezoelektrischen Element eine Scheibe aus Steatit angeordnet.

Gemäß einer Weiterbildung ist die auf der membran-abgewandten Seite angeordnete Anschlußelektrode symmetrisch zu der Achse, welche eine Diagonale der Kreisfläches des piezoelektrischen Elements ist.

Gemäß einer Ausgestaltung sind die Elektroden elektrisch leitend an Adern einer im Gehäuse vorgesehen flexiblen Leiterplatte angeschlossen.

Gemäß einer Ausgestaltung sind auf der flexiblen Leiterplatte zur Spannungsbegrenzung dienende in Oberflächenmontage aufgelötete Multilayer-Varistoren angeordnet.

Gemäß einer Weiterbildung weist das Schwingelement zwei voneinander beabstandet auf der Membran befestigte Schwingstäbe auf, die durch die Schwingungen der Membran in gegensinnige Schwingungen quer zu deren Längsachse versetzt werden, und eine in der Membranebene verlaufende gerade, die Schwingstäbe verbindende Linie verläuft senkrecht zu der Achse, bezüglich derer die Elektroden symmetrisch auf der Membran angeordnet sind.

Gemäß einer weiteren Weiterbildung ist eine Montagehülse in dem Gehäuse angeordnet, die eine erste membran-zugewandte Öffnung aufweist, welche von dem piezoelektrischen Element verschlossen ist, und die eine zweite membran-abgewandte Öffnung aufweist, durch die die flexible Leiterplatte hindurch geführt ist.

Gemäß einer Ausgestaltung ist auf der Montagehülse eine Fixiervorrichtung zur Fixierung der flexiblen Leiterplatte vorgesehen.

Gemäß einer weiteren Ausgestaltung ist auf der membran-abgewandten Seiten von Montagehülse und Fixiervorrichtung in dem Gehäuse ein Stecker angeordnet, an den die Adern der flexiblen Leiterplatte elektrisch leitend angeschlossen sind und der Steckkontakte aufweist, über die die Adern kontaktierbar sind.

Gemäß einer Weiterbildung ist eine Rückkopplungsschaltung vorgesehen, an deren Eingang im Betrieb ein vom elektromechanischen Wandler aufgenommenes Empfangssignal anliegt, an deren Ausgang im Betrieb ein Sendesignal zur Verfügung steht, das gleich dem um eine sensorspezifische Phase verschobenen Empfangssignal ist und das im Betrieb an dem elektromechanischen Wandler anliegt, wobei die erzeugte sensorspezifische Phasenverschiebung für Eingangssignale, deren Frequenzen innerhalb eines Frequenzbereichs liegen nahezu gleich ist, und wobei der Frequenzbereich durch die Frequenzen gegeben ist, die die Vorrichtung beim Eintauchen in verschiedene Medien aufweist.

Gemäß einer Weiterbildung ist die sensorspezifische Phasenverschiebung gleich einer Phasendifferenz, bei der sich mit der Vorrichtung aufgenommene Kurven schneiden, die den Verlauf einer Phasendifferenz zwischen dem Sendesignal und dem Empfangssignal in Abhängigkeit von der Frequenz des Sendesignals für in verschiedene Medien eingetauchte Schwingelemente zeigen.

Dadurch daß der prozentuale Abstand zwischen der Resonanzfrequenz $f_r$ und der Antiresonanzfrequenz $f_{ar}$ bezogen auf die Resonanzfrequenz $f_r$ größer als 20 % ist, ist sichergestellt, daß die Vorrichtung in einem weiten Anwendungsbereich einsetzbar ist. Es kann die Vorrichtung wie nachfolgend näher erläutert ist, in sehr vielen verschiedenen Medien eingesetzt werden, angefangen mit Wasser bis hin zu hochviskosen Medien, wie z.B. Honig, oder sehr zähen Schäumen, ohne daß Änderungen an der Einstellung erforderlich sind.

Die Erfindung und weitere Vorteile werden nun anhand der Figuren der Zeichnung, in denen ein Ausführungsbeispiel dargestellt ist, näher erläutert; gleiche Elemente sind in den Figuren mit gleichen Bezugszeichen versehen.

Fig. 1        zeigt eine erfindungsgemäße Vorrichtung im Längsschnitt;

Fig. 2 zeigt    eine Draufsicht auf die membran-abgewandte Seite des piezoelektrischen Elements von Fig. 1;

Fig. 3 zeigt    eine Ansicht der zylindrischen Mantelfläche des piezoelektrischen Elements von Fig. 1;

Fig. 4 zeigt    eine Draufsicht auf die membran-zugewandte Seite des piezoelektrischen Elements von Fig. 1;

Fig. 5 zeigt    eine Explosionsdarstellung der im Inneren des Gehäuses angeordneten Bauteile von Fig. 1;

Fig. 6 zeigt    eine flexible Leiterplatte;

Fig. 7a zeigt    die Amplitude eines Meßsignals;

Fig. 7b zeigt    die Phase des Meßsignals;

Fig. 8a zeigt    die Amplitude eines zusätzlichen Signals;

Fig. 8b zeigt    die Phase des zusätzlichen Signals;

Fig. 9a zeigt    die Amplitude eines Empfangssignals;

Fig. 9b zeigt     die Phase des Empfangssignal;

Fig. 10 zeigt     die Phase des Empfangssignals in Abhängigkeit von der Frequenz für in verschiedene Medien eingetauchte Schwingstäbe;

Fig. 11 zeigt     die Frequenz des Empfangssignals in Abhängigkeit von der Eintauchtiefe der Schwingstäbe für verschiedene Medien;

Fig. 12            zeigt ein Blockschaltbild einer Rückkopplungsschaltung; und

Fig. 13            zeigt ein Ausführungsbeispiel der Rückkopplungsschaltung von Fig. 12.

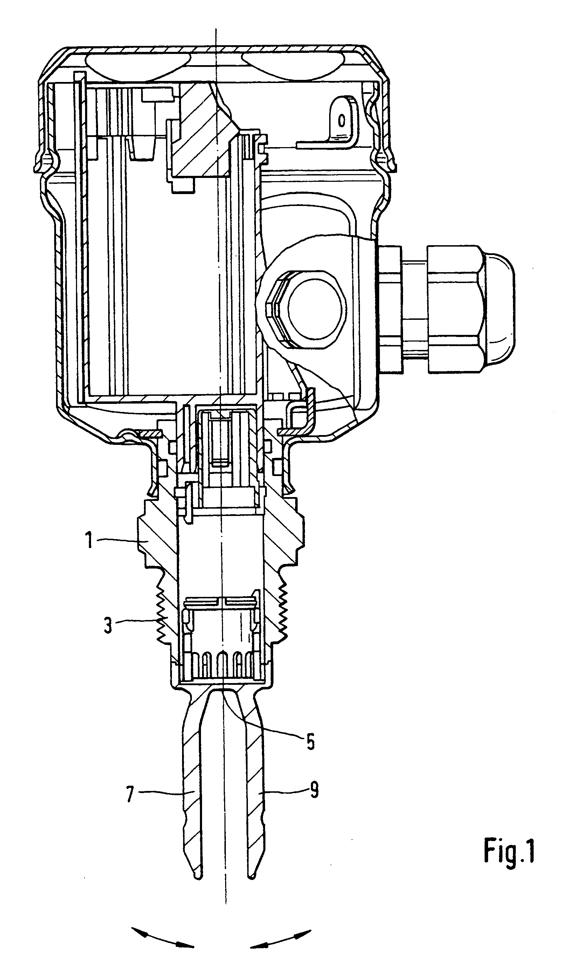

In Fig. 1 ist ein Ausführungsbeispiel einer erfindungsgemäßen Vorrichtung zur Feststellung und/oder Überwachung eines vorbestimmten Füllstandes in einem Behälter dargestellt.

Die Vorrichtung weist ein zylindrisches Gehäuse 1 auf, an dessen äußerer zylindrischer Mantelfläche ein Gewinde 3 vorgesehen ist, mittels dessen die Vorrichtung in eine auf der Höhe des vorbestimmten Füllstandes in einem in Fig. 1 nicht dargestellten Behälter angeordnete Öffnung einschraubbar ist. Andere Arten der Befestigung, z.B. mittels eines Flanschs, sind ebenfalls einsetzbar.

Das Gehäuse 1 ist auf dessen in den Behälter weisenden Ende von einer an ihrem Rand fest in das Gehäuse 1 eingespannten Membran 5 abgeschlossen. An der Membran 5 ist ein in den Behälter ragendes Schwingelement befestigt. Dies umfaßt in dem gezeigten Ausführungsbeispiel zwei voneinander beabstandet auf der Membran 5 befestigte in den Behälter ragende Schwingstäbe 7, 9.

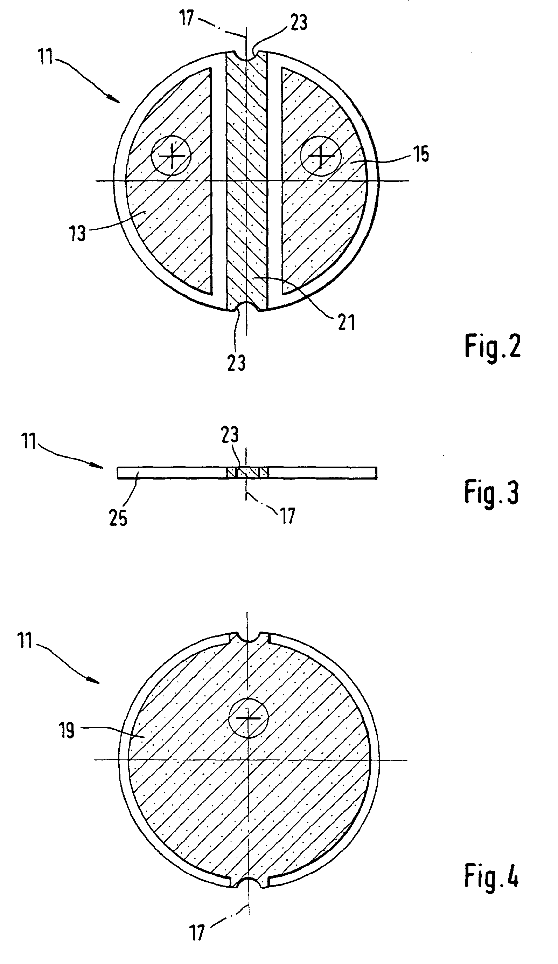

Auf der Membran 5 ist ein elektromechanischer Wandler angeordnet. In dem gezeigten Ausführungsbeispiel ist dies ein einziges piezoelektrisches Element 11. Fig. 2 zeigt eine Draufsicht auf die membran-abgewandte Seite des piezoelektrischen Elements 11, Fig. 3 zeigt eine Ansicht von dessen zylindrischer Mantelfläche und Fig. 4 eine Draufsicht auf dessen membran-zugewandte Seite.

Das piezoelektrische Element 11 dient zur Anregung der Membran 5 zu Schwingungen in Abhängigkeit von einem an dem piezelektrischen Element 11 anliegenden Sendesignal S und zum Empfangen und Umwandeln von deren Schwingungen in ein elektrisches Empfangssignal E.

Das piezoelektrische Element 11 ist scheibenförmig und weist eine homogene Polarisation auf. Die Polarisationsrichtung ist parallel zur Flächennormalen auf die Membran 11.

Das piezoelektrische Element 11 ändert, für sich genommen, in Abhängigkeit von einer in Polarisationsrichtung anliegenden Spannungdifferenz seine Dicke. Liegt eine Wechselspannung an, so oszilliert die Dicke. Nimmt die Dicke zu, so nimmt der Durchmesser des piezoelektrischen Elementes 11 ab, nimmt die Dicke ab, so vergrößert sich der Durchmesser entsprechend.

Aufgrund dieses Schwingungsverhaltens des piezoelektrischen Elements 11 bewirkt eine Spannungsdifferenz im in die Vorrichtung eingebauten Zustand eine Durchbiegung der Membran 5.

Liegt eine Spannungsdifferenz an, die beim piezoelektrischen Element 11, für sich alleine genommen, einen vergrößerten Durchmesser bewirkt, so liegt das Zentrum der Durchbiegung, d.h. mindestens ein Schnittpunkt von Senkrechten auf die Befestigungsfläche, auf der membran-zugewandten Seite des piezoelektrischen Elements 11. Liegt eine Spannungsdifferenz an, die beim piezoelektrischen Element 11, für sich alleine genommen, einen verringerten Durchmesser bewirkt, so liegt das Zentrum der Durchbiegung auf dessen membran-abgewandter Seite.

Wird an das piezoelektrische Element 11 eine Wechselspannung angelegt, so führt die Membran 5 Schwingungen aus, deren Schwingungsbauch sich in deren Zentrum befindet.

Die auf der Membran 5 angeordneten Schwingstäbe 7, 9 führen aufgrund der Schwingungen der Membran 5 gegensinnige Schwingungen quer zu deren Längsachse aus. Die Auslenkung der Schwingstäbe 7, 9 ist in Fig. 1 durch Pfeile angedeutet. Infolge dieser Gegensinnigkeit heben sich die von jedem Schwingstab 7, 9 auf die Membran 5 ausgeübten Wechselkräfte auf. Dadurch ist die mechanische Beanspruchung der Einspannung gering, und es wird keine Schwingungsenergie auf das Gehäuse 1 übertragen.

Auf dem piezoelektrischen Element 11 sind zwei formgleiche Elektroden angeordnet. Eine der Elektroden dient als Sender 13. Durch eine am Sender 13 anliegende Wechselspannung wird die Membran 5 in Schwingung versetzt. Die andere Elektrode dient als Empfänger 15. Eine Schwingung der Membran 5 erzeugt ein über den Empfänger 15 abnehmbares Empfangssignal E.

Sender 13 und Empfänger 15 sind symmetrisch zu einer in der Membranebene liegende Achse 17 angeordnet. Die Achse 17 entspricht einer Diagonalen der Kreisfläche des piezoelektrischen Elements 11.

Auf der membran-zugewandten Seite des piezoelektrischen Elements 11 ist eine in Fig. 4 dargestellte Masseelektrode 19 angeordnet.

Wenn das Gehäuse 1 und die Membran 5 aus einem elektrisch leitfähigen Material bestehen und elektrisch leitend mit Massepotential verbunden sind, genügt es das piezoelektrische Element 11 auf die Membran 5 mit einem leitfähigen Klebstoff aufzukleben oder es auf die Membran 5 aufzulöten. Es ist damit gleichzeitig der elektrische Anschluß der Masseelektrode 19 und die zur Schwingungsanregung dienende mechanische Verbindung zwischen Membran 5 und piezoelektrischem Element 11 hergestellt.

Wenn das Gehäuse 1 jedoch aus einem nichtleitenden Material, z.B. aus einem Kunststoff, besteht oder wenn aus sicherheitstechnischen Gründen keine leitende Verbindung zwischen dem piezoelektrischen Element 11 und der Membran 5 bzw. dem Gehäuse 1 bestehen soll, so muß der Anschluß der Masseelektrode 19 auf andere Weise erfolgen. Je nach Einsatzbereich und Einsatzland der Vorrichtung gelten andere Vorschriften. Eine häufige in vielen Ländern und für viele Anwendungsgebiete gestellte Anforderung ist die, daß zwischen der Elektronik der Vorrichtung einschließlich der elektrischen Anbindung des piezoelektrischen Elements 11 und dem Gehäuse 1 eine galvanische Trennung besteht muß.

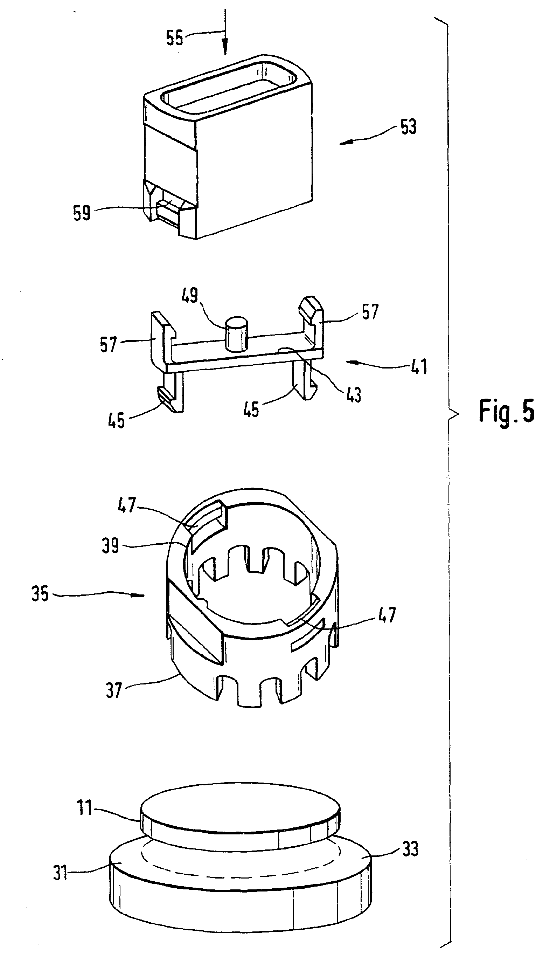

Wenn aus sicherheitstechnischen Gründen keine elektrisch leitende Verbindung zwischen dem Gehäuse 1 bzw. der Membran 5 und dem piezoelektrischen Element 11 bestehen darf, so ist zwischen Membran 5 und piezoelektrischem Element 11 eine Scheibe 31 aus einem Isolator einzufügen. Eine solche Scheibe 31 ist in der Explosionsdarstellung von Fig. 5 gezeigt. Prinzipiell sind eine Vielzahl von verschiedenen isolierenden Materialien einsetzbar. Untersuchungen haben jedoch gezeigt, daß man besonders gute Schwingungsübertragungseigenschaften, insb. geringe Verlustleistungen, erzielt, wenn ein Werkstoff verwendet wird, dessen mechanische Steifigkeit ungefähr der mechanischen Steifigkeit des piezoelektrischen Elements 11 ist. Die miteinander korrelierenden Größen Elastizitätsmodul, Kompressionsmodul, Biegesteifigkeit und Druck- und Zugfestigkeit sind jeweils ein Maß für die Steifigkeit eines Materials. Ist die Steifigkeit der Scheibe 31 geringer als die des piezoelektrischen Elements 11, so wird ein Teil der zur Schwingungsanregung zur Verfügung stehenden Energie verloren gehen, da die Scheibe 31 durch das steifere piezoelektrische Elemente 11 verformt wird. Ist die Steifigkeit der Scheibe 31 größer als die der piezoelektrischen Scheibe 31, so behindert die Scheibe 31 die Schwingung des piezoelektrischen Elements 11 und es geht ebenfalls Schwingungsenergie verloren.

Besonders gute Ergebnisse wurden mit einer Scheibe 31 aus Steatit erzielt. Steatit ist ein Werkstoff der aus einer Paste aus Talk und Wasser durch Pressen und Sintern gewonnen wird. Gute Ergebnisse können bezüglich der Energiebilanz auch mit Porzellanen auf Siliziumoxid-Basis erreicht werden. Ebenfalls einsetzbar sind aufgrund deren Steifigkeit mit 30% bis 50% Glasfasern verstärkte Kunststoffe wie z.B. Polyetheretherketon (PEEK) oder Polyetherimid (PEI). Diese Werkstoffe können jedoch nur bei Temperaturen unterhalb der Glasübergangstemperatur des jeweiligen glasfaserverstärkten Kunststoffes eingesetzt werden, wodurch der Anwendungsbereich in dem die Vorrichtung einsetzbar ist eingeschränkt ist.

Aluminiumoxid-Keramiken sind dagegen in der Regel schlechter geeignet, da in Verbindung mit Aluminiumoxid-Keramiken dickere piezoelektrische Elemente eingesetzt werden müssen. Dickere piezoelektrische Elemente weisen geringere Kapazitäten auf, was wiederum für die nachfolgenden Elektronik nachteilig ist.

Dies läßt sich beispielhaft durch einen Vergleich der Elastizitätsmodule veranschaulichen. Ein piezoelektrisches Element 11 aus Blei-Zirkonium-Titanat (PZT-Keramik) weist typischer Weise ein Elastizitätsmodul von ca. $140 \times 10^3$ N/mm$^2$ auf. Steatit weist einen Elastizitätsmodul von ca. $100 \times 10^3$ N/mm$^2$ auf. Demgegenüber weisen Aluminiumoxid-Keramiken Elastizitätsmodule von bis zu $300 \times 10^3$ N/mm$^2$ auf.

Erfindungsgemäß ist die Masseelektrode 19 leitend mit einer auf der membran-abgewandten Seite angeordneten Anschlußelektrode 21 verbunden. Dies wird vorzugsweise dadurch erreicht, daß sich die leitfähige Schicht, die die Masseelektrode 19 bildet an mindestens einer Stelle 23 über eine zylindrische Mantelfläche 25 des piezoelektrischen Elements 11 hinweg auf die gegenüberliegende Membranseite erstreckt, wo sie in die Anschlußelektrode 21 übergeht. In dem in Fig. 2 dargestellten Ausführungsbeispiel sind zwei einander diametral gegenüberliegende Stellen 23 vorgesehen. Die Anschlußelektrode 21 ist symmetrisch zu der in der Membranebene liegenden Achse 17 und befindet sich zwischen dem Sender 13 und dem Empfänger 15. Sie hat die Form einer verbreiterten Diagonalen.

Durch diese Anordnung wird erreicht, daß die Masseelektrode 19 über die Anschlußelektrode 21 auf der membran-abgewandten Seite des piezoelektrischen Elements 11 elektrisch anschließbar ist. Dies bietet erhebliche Vorteile bei der Fertigung erfindungsgemäßer Vorrichtungen. Da der elektrische Anschluß aller drei Elektroden jeweils auf der gleichen Seite des piezoelektrischen Elements 11 erfolgt, können große Serien in Chargen auf entsprechenden Trägern angeordnet und gleichzeitig bearbeitet werden. Ein Umdrehen oder Herausnehmen der piezoelektrischen Elemente 11 ist nicht erforderlich.

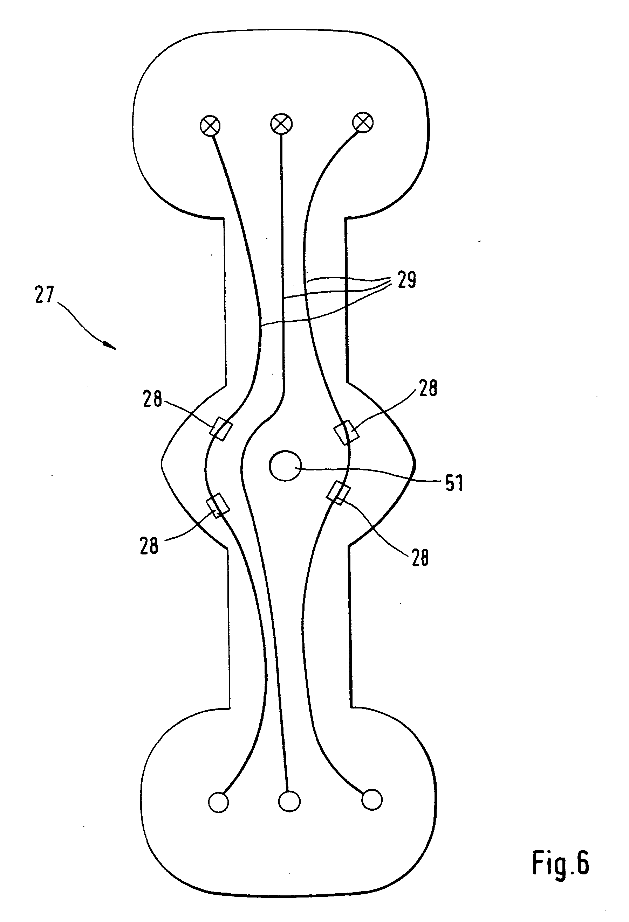

Zum elektrischen Anschluß ist vorzugsweise eine drei Adern 29 aufweisende , in Fig. 6 dargestellte, flexible Leiterplatte 27 vorgesehen. Diese ist in einem einzigen Arbeitsschritt auf die drei Elektroden auflötbar. Hierdurch sind die Elektroden elektrisch leitend mit den Adern 29 der flexiblen Leiterplatte 27 verbunden. Da der Aufbau hinsichtlich Sender 13 und Empfänger 15 völlig identisch ist, ist eine Fehlmontage durch Verwechslung von Sender 13 und Empfänger 15 nicht möglich. Auch hinsichtlich des Anschlusses der Anschlußelektrode 21 kann ebenfalls kein Fehler auftreten, da diese Elektrode durch deren Position zwischen den beiden anderen Elektroden eindeutig ausgezeichnet ist.

Aus sicherheitstechnischen Gründen ist vorzugsweise sowohl der Sender 13 als auch der Empfänger 15 jeweils über ein sowohl positive als auch negative anliegende Spannungen begrenzendes Element mit Masse verbunden.

Vorzugsweise sind dies Multilayer-Varistoren, die aufgrund deren geringer Abmessungen auf der flexiblen Leiterplatte 26 aufgebracht werden. Vorzugsweise werden oberflächenmontierbare Multilayer-Varistoren, sogenannte SMD-Bauteile, eingesetzt, die maschinell in Oberflächenmontage auf die flexible Leiterplatte 27 auflötbar sind.

Bei der Herstellung einer erfindungsgemäßen Vorrichtung wird zunächst das piezoelektrische Element 11 auf die Scheibe 31 geklebt. Wie in Fig. 5 dargestellt, weist die Scheibe 31 einen etwas größeren Durchmesser als das piezoelektrische Element 11 auf. Die Scheibe 31 weist folglich einen freien äußeren ringförmigen Rand 33 auf. In einem nächsten Arbeitsgangs wird die flexible Leiterplatte 27 an Sender 13, Empfänger 15 und Anschlußelektrode 21 angeschlossen. Dies erfolgt vorzugsweise durch einen maschinell ausgeführten Lötvorgang bei dem vorzugsweise eine ganze Charge mit flexiblen Leiterplatten 27 bestückt und durch ein Lötbad gezogen wird.

Es ist eine in Fig. 5 dargestellte Montagehülse 35 vorgesehen, die im wesentlichen zylindrisch ist. Im eingebauten Zustand ist die Montagehülse 35 im Gehäuse 1 angeordnet und weist eine erste membran-zugewandte Öffnung 37 und eine zweite membran-abgewandte Öffnung 39 auf.

Bei der Herstellung wird die Montagehülse 35 mit einer die membran-zugewandte Öffnung 37 begrenzenden ringförmigen Stirnfläche auf dem Rand 33 der Scheibe 31 befestigt. Sie wird z.B. angeklebt. Die Öffnung 37 ist somit durch das piezoelektrische Element 11 verschlossen. Die in Fig. 5 nicht dargestellte flexible Leiterplatte 27 ist durch die zweite membran-abgewandte Öffnung 39 hindurch geführt und in dem Gehäuse 1 angeordnet.

Es ist eine Fixiervorrichtung 41 zur Fixierung der flexiblen Leiterplatte 27 vorgesehen. Dies ist in dem in Fig. 5 dargestellten Ausführungsbeispiel ein Träger 43, der zwei Schnapphaken 45 aufweist mit denen er auf die Montagehülse 35 aufrastbar ist. Die Montagehülse 35 weist zwei einander diametral gegenüberliegende am Rand der Öffnung 39 angeordnete Hinterschneidungen 47 auf, in die die Schnapphaken 45 einrasten.

Auf dem Träger 43 ist auf dessen membran-abgewandter Seite ein zylindrischer Stab 49 angeformt und die flexible Leiterplatte 27 weist in Längsrichtung in deren Mitte eine kreisförmige Ausnehmung 51 auf. Zur Fixierung wird die flexible Leiterplatte 27 auf die Fixiervorrichtung 41 aufgesteckt, derart, daß der Stab 49 die Ausnehmung 51 durchdringt.

Auf der membran-abgewandten Seite von Montagehülse 35 und Fixiervorrichtung 41 ist in dem Gehäuse 1 ein Stecker 53 angeordnet. An diesen sind die Adern 29 der flexiblen Leiterplatte 27 elektrisch leitend angeschlossen. Der Stecker 53 weist in Fig. 5 nicht dargestellte Steckkontakte auf, über die die Adern 29 von oben in der in Fig. 5 durch einen Pfeil 55 dargestellten Richtung kontaktierbar sind.

Auf der Fixiervorrichtung 41 sind zwei weitere in membran-abgewandter Richtung weisende Schnapphaken 57 vorgesehen. Am membran-zugewandten Ende des Steckers 53 sind entsprechende Hinterschneidungen 59 angeordnet, in die die Schnapphaken 57 beim Aufsetzen des Steckers 53 auf die auf der Montagehülse 35 befestigte Fixiervorrichtung 41 einrasten.

Die in Fig. 5 dargestellten Bauteile: Scheibe 31, piezoelektrisches Element 11, Montagehülse 35, Fixierelement 41, Stecker 53 und die in Fig. 6 dargestellte flexible Leiterplatte 27 bilden eine Baueinheit, die komplett vormontiert werden kann und als fertige Baueinheit nur noch in das Gehäuse 1 einzubringen und dort zu befestigen ist. Die Befestigung erfolgt z.B. in dem auf die ins Gehäuseinnere weisende Membranoberfläche ein Klebstoff aufgebracht und die Baueinheit mit der Scheibe 31 voran auf die Membran 5 aufgedrückt wird.

Vorzugsweise wird dabei die Orientierung der Baueinheit in dem Gehäuse 1 so gewählt, daß eine gedachte in der Membranebene verlaufende gerade die Schwingstäbe 7, 9 verbindende Linie senkrecht zu der Achse 17 verläuft, bezüglich derer die Elektroden symmetrisch auf der Membran angeordnet sind. Hierdurch wird erreicht, daß eine Schwingungskomponente, die eine Auslenkung der Schwingstäbe 7, 9 in einer Ebene erzeugt, in der sie sich in deren Gleichgewichtslage befinden, also senkrecht zu der gewünschten Auslenkung, praktisch nicht auftritt.

Das Empfangssignal E, das über den Empfänger 15 zur Verfügung steht weist eine Amplitude A und eine Phase $\Delta\varphi$ auf. Mit Phase $\Delta\varphi$ ist hier die Phasendifferenz zwischen dem Empfangssignal E und dem am Sender 15 anliegenden Sendesignal S bezeichnet.

Die Amplituden A ist um so größer, je größer die mechanische Schwingungsamplitude der Schwingstäbe 7, 9 ist. In Ausnutzung dieser Tatsache wird die Vorrichtung vorzugsweise bei deren Resonanzfrequenz $f_r$ betrieben. Bei der Resonanzfrequenz $f_r$ ist die mechanische Schwingungsamplitude maximal.

Betrachtet man einen harmonischen Oszillator als Beispiel für ein ideales Schwingungssystem, so weist dessen Schwingungsamplitude ein einziges Maximum in Abhängigkeit von der Schwingungsfrequenz auf. Die Phasendifferenz zwischen der Schwingungsanregung und der Schwingung des Oszillator erfährt im Bereich dieses Maximums einen Phasensprung von 180°. Bei der Resonanzfrequenz ist die Schwingungsamplitude maximal und die Phasendifferenz beträgt 90°.

Basierend auf dem gleichen physikalischen Grundprinzip besteht auch bei der vorliegenden Vorrichtung im Resonanzfall eine feste Phasenbeziehung zwischen dem Sendesignal S und dem Empfangssignal E. Der feste Wert der Phasendifferenz ist abhängig von den mechanischen und elektrischen Schwingungseigenschaften der Vorrichtung. Messungen haben gezeigt, daß die Werte in der Regel zwischen + bzw. - 60° und + bzw. - 90° liegen. Die Vorzeichen ergeben sich aus der Definition des Bezugspunktes für die Bestimmung der Phasenlage.

Damit eine solche Vorrichtung in Schwingungen nahe deren Resonanzfrequenz $f_r$ versetzt wird, ist eine Rückkopplungsschaltung vorgesehen, die die zwischen dem elektrischen Sendesignal S und dem Empfangssignal E bestehende Phasendifferenz auf einen bestimmten konstanten Wert $\Delta\phi_R$ regelt.

Bei einem harmonischen Oszillator bewirkt eine Dämpfung oder eine Reduktion der Schwingungsgüte eine Reduktion der maximalen Amplitude im Resonanzfall. Die Phase steigt in einem solchen Fall in Abhängigkeit von der Frequenz nicht sprunghaft sondern kontinuierlich an und zwar um so langsamer, je größer die Dämpfung bzw. die Reduktion der Schwingungsgüte ist. Insgesamt erfolgt jedoch auch bei sehr großer Dämpfung eine Phasenänderung von insgesamt 180° und bei der Resonanzfrequenz besteht eine Phasendifferenz von 90°. Der feste der Resonanz entsprechende Wert der Phasendifferenz von 90° existiert immer und wird bei der Resonanzfrequenz angenommen.

Im Unterschied zu einem idealen Oszillator bestehen bei der oben genannten Vorrichtung Kopplungen elektrischer und mechanischer Art zwischen dem piezoelektrischen Element 11, dem Sender 13, dem Empfänger 15 und dem mechanischen Schwingungsgebilde.

Mechanische Kopplungen, wie sie z. B. durch mechanische Verspannungen auftreten könnten, sind bei der beschriebenen Vorrichtung vernachlässigbar gering und werden daher nachfolgend nicht berücksichtigt.

Elektrische Kopplungen bestehen zwischen dem Sender 13 und Masselektrode 19, zwischen dem Sender 13 und der Anschlußelektrode 23, zwischen dem Empfänger 23 und der Masseelektrode 23, zwischen dem Empfänger 15 und der Anschlußelektrode 23 und zwischen dem Sender 13 und dem Empfänger 15. Sie können in Form eines Ersatzschaltbildes durch die jeweiligen Elektroden verbindende Kapazitäten dargestellt werden.

Diese kapazitive Kopplung bewirkt, daß am Empfänger 15 auch dann ein von null verschiedenes Signal anliegt, wenn die Schwingstäbe 7, 9 fest eingespannt sind und die Membran 5 keine mechanische Bewegung ausführt. Dabei liefert die elektrische Kopplung zwischen dem Sender 13 und dem Empfänger 15 sicherlich den größten Anteil.

Das am Empfänger 15 anliegenden Empfangssignals E setzt sich aus zwei Komponenten zusammen, nämlich einem Meßsignal $E_M$ und einem durch die elektrische Kopplung bedingten zusätzlichen Signal $E_{el}$.

$$E = E_M + E_{el}$$

Das Meßsignal $E_M$ beruht auf der Schwingung des mechanischen Schwingungsgebildes und weist eine frequenzabhängige Amplitude $A_M(f)$ und eine frequenzabhängige Phase $\Delta\phi_M(f)$ auf.

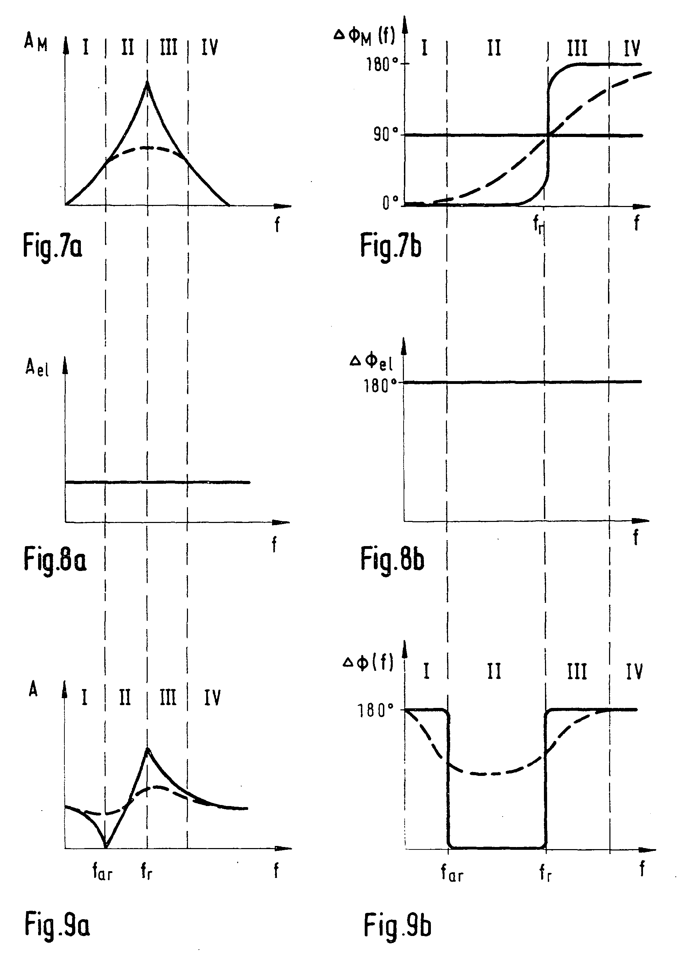

Fig. 7a zeigt die Amplitude $A_M(f)$ und Fig. 7b die Phase $\Delta\phi_M(t)$ des Meßsignals $E_M$ in Abhängigkeit von der Frequenz f. Die Kurven können rechnerisch durch Simulationsrechnungen, z.B. durch Finite-Elemente-Rechnungen bestimmt werden.

Experimentell können sie ausgemessen werden, indem der Sender 13 an einen Frequenzgenerator angeschlossen wird und Phase und Amplitude der Schwingung der Schwingstäbe 7, 9 in Abhängigkeit von der Frequenz des Frequenzgenerators, z. B. mit einem Laservibrometer, bestimmt werden.

In beiden Figuren 7a, 7b entspricht jeweils die durchgezogene Linie einer Vorrichtung die frei schwingt und die gestrichelte Linie einer Vorrichtung deren Schwingung stark gedämpft ist. Sowohl die Amplitude $A_M(f)$ als auch die Phase $\Delta\phi_M(f)$ des Meßsignals weist in beiden Fällen den für einen harmonischen Oszillator typischen vorgehend bereits beschriebenen Verlauf auf.

Das zusätzlichen Signal $E_{el}$ weist eine im wesentlichen konstante Amplitude $A_{el}$ und eine im wesentlichen konstante Phase $\Delta\phi_{el}$ auf. Mit Phase ist auch hier die Phasenversatz der jeweiligen Komponente des elektrischen Signals E bezogen auf das elektrische Sendesignal S bezeichnet.

Die durchgezogene Linie in Fig. 8a zeigt die Amplitude $A_{el}$ und die durchgezogene Linie in Fig. 8b die Phase $\Delta\phi_{el}$ des zusätzlichen Signals $E_{el}$ in Abhängigkeit von der Frequenz f. Auch diese Kurven können durch Simulationsrechnungen ermittelt werden. Experimentell können sie z.B. aufgenommen werden, indem ein nicht-polarisiertes piezoelektrisches Element eingesetzt wird. Bei diesem wird durch ein Sendesignal keinerlei mechanische Bewegung erzeugt und das Signal E entspricht folglich dem auf elektrischer Kopplung beruhenden zusätzlichen Signal $E_{el}$. Dieses kann mittels eines Oszilloskops ausgemessen werden.

Die Amplitude $A_{el}$ und die Phasen $\Delta\phi_{el}$ des zusätzlichen Signals $E_{el}$ steht in eindeutigem Zusammenhang zu dem mechanischen Aufbau der jeweiligen Vorrichtung und deren elektrischen Eigenschaften. In dem gezeigten Ausführungsbeispiel weist das zusätzliche Signal $E_{el}$ eine Phase von 180° auf.

Fig. 9a zeigt die Amplitude $A(f)$ und Fig. 9b die Phase $\Delta\phi(f)$ des Signals E. Die beiden Kurven ergeben sich aus der phasen- und amplitudengetreuen Überlagerung der beiden zuvor beschriebenen Komponenten des Signals E.

$$Ee^{i\Delta\phi} = A_M e^{i\Delta\phi_M} + A_{el}\, e^{i\Delta\phi_{el}}$$

Beide Kurven weisen jeweils vier Bereiche I, II, III, IV auf, die nachfolgend stark vereinfacht beschrieben sind.

In den äußeren Bereichen I und IV weist das zusätzliche Signal $E_{el}$ die größere Amplitude $A_{el}$ auf und ist somit dominant. Die resultierende Phase $\Delta\phi$ entspricht somit im wesentlichen der Phase des zusätzlichen Signals $\Delta\phi_{el}$.

In den Bereichen I und II sind die Signale gegenphasig. Im Bereich I fällt die Amplitude A ab. An der oberen Bereichsgrenze beträgt sie null. Bei dieser nachfolgend als Antiresonanzfrequenz $f_{ar}$ bezeichneten Frequenz weisen das Meßsignal $E_M$ und das zusätzliche Signal $E_{el}$ die gleiche Amplitude und entgegengesetzte Phasen auf. Im Bereich II steigt die Amplitude A erneut an. In den Bereichen III und IV sind die beiden Signale gleichphasig und addieren sich. Die Amplitude A weist bei der Resonanzfrequenz $f_r$ die auf der Grenze zwischen den Bereichten II und III liegt ein Maximum auf und fällt zu höheren Frequenzen hin stetig ab.

Die Phase $\Delta\phi$ beträgt im Bereich I 180°, im Bereich II 0° und in den Bereichen III und IV wieder 180°.

Tritt nun der Fall ein, daß das mechanische Schwingungsgebilde gedämpft ist, so zeigen Amplitude $A_M(f)$ und Phase $\Delta\phi_M(f)$ des Meßsignals den in den Figuren 7a und 7b gestrichelt dargestellten Verlauf. Die Amplitude $A_M(f)$ steigt und sinkt erheblich langsamer mit der Frequenz und weist einen deutlich geringeren Maximalwert auf. Die Phase $\Delta\phi_M(f)$ zeigt keinen Phasensprung, sondern steigt kontinuierlich mit der Frequenz. Je stärker die Dämpfung ist, um so geringer ist der Maximalwert der Amplitude und um so geringer ist die Steigung der Phase. Die Phase $\Delta\phi_M(f)$ erreicht asymptotisch jedoch immer die Werte 0° und 180° und bei der Resonanzfrequenz beträgt sie nach wie vor 90°. Das zusätzliche Signal $E_{el}$ bleibt unverändert.

Amplitude A(f) und Phase $\Delta\phi(f)$ des sich aus der amplituden- und phasengetreuen Überlagerung der beiden Komponenten ergebenden Empfangssignal E unterscheiden sich deutlich von dem erstgenannten Fall, bei dem keine Reduktion der Schwingungsgüte vorlag. Die Maxima der Amplitude A(f) sind sehr viel weniger ausgeprägt und die Phase $\Delta\phi(f)$ weist anstelle der beiden einander entgegengesetzten Phasensprünge von jeweils 180° zwei einander entgegengerichtete kontinuierliche Phasenänderungen auf. Der maximale Phasenunterschied ist deutlich geringer als 180°. Abhängig von der Dämpfung des Systems ist er sogar geringer als 90°.

Tritt also eine Dämpfung des mechanischen Schwingungsgebildes, z.B. in Schaum oder in einem viskosen Medium, oder eine anders geartete Reduktion der Schwingungsgüte des Systems auf, so weist die Phasendifferenz $\Delta\phi$ zwischen dem elektrischen Sendesignal und dem elektrischen Signal E in Abhängigkeit von der Frequenz zwar noch zwei einander entgegengerichtete kontinuierliche Phasenänderungen auf, der maximale Phasenunterschied kann jedoch sehr gering sein. Die maximale Phasendifferenz ist um so geringer, je geringer der Abstand zwischen der Resonanzfrequenz $f_r$ und der Antiresonanzfrequenz $f_{ar}$ ist.

Vergleichbare Signalanalysen können auch bei anderen als der zuvor anhand der Figuren 1 bis 6 beschriebenen erfindungsgemäßen Vorrichtung aufgestellt werden, die ein Schwingelement und einen elektromechanischen Wandler aufweisen. Untersuchungen haben gezeigt, daß der prozentuale Abstand zwischen der Resonanzfrequenz und der Antiresonanzfrequenz ausschlaggebend ist für die Bandbreite der verschiedenen Medien, in denen die Vorrichtung einwandfrei einsetzbar ist. Dabei hat sich gezeigt, daß ein prozentualer Abstand von 20% oder mehr ausreicht, um sicherzustellen, daß die Vorrichtung in praktisch allen Anwendungen einsetzbar ist. Der prozentualer Abstand bezeichnet den Betrag der Differenz von Resonanzfrequenz $f_r$ und Anitresonanzfrequenz $f_{ar}$ bezogen auf die Resonanzfrequenz $f_r$. Es kann in allen zuvor erwähnten Medien die gleiche Vorrichtung eingesetzt werden, ohne das Änderungen oder medienspezifische Einstellungen vorgenommen werden müssen.

Der prozentuale Abstand zwischen der Resonanzfrequenz und der Antiresonanzfrequenz einer Vorrichtung kann wie zuvor beschrieben gemessen werden und eine Vorrichtung kann dahingehend optimiert werden, daß sie einen größeren prozentualen Abstand aufweist. Zur Vergrößerung dieses Abstandes eignen sich die folgenden Maßnahmen:

a) Erhöhung der mechanischen Schwingungsgüte des Schwingelements, z.B. durch Formgebung und Materialwahl;
b) Reduzierung von Energieverlusten, z.B. durch symmetrischen Aufbau,
c) Vermeidung von bei der Übertragung der Schwingung von dem Wandler auf die Membran und umgekehrt auftretenden Energieverlusten;
d) Reduzierung der Anzahl der Bauteile; und
e) Vermeidung von mechanischen Verspannungen.

Die erfindungsgemäße Vorrichtung, wie sie in den Figuren 1 bis 6 dargestellt ist, bietet den Vorteil, daß aufgrund der Verwendung eines einzigen piezoelektrischen Elements 11, das entweder direkt oder unter Zwischenfügung einer Scheibe 31 aus einem aufgrund dessen Steifigkeit optimal angepaßten Material praktisch keine mechanischen Verspannungen auftreten, die eine Verringerung des Abstandes zwischen der Resonanzfrequenz $f_r$ und der Antiresonanz-

frequenz $f_{ar}$ zur Folge hätten.

Zusätzlich bedingt die Symmetrie von Sender 13 und Empfänger 15 und deren Anordnung auf dem homogen polarisierten piezoelektrischen Element 11, daß die Amplitude $A_{el}$ des zusätzlichen Signals $E_{el}$ im Vergleich zu der Amplitude AM des Meßsignals $E_M$ sehr gering ist. Die symmetrische Anordnung der Anschlußelektrode 23 zwischen Sender 13 und Empfänger 15 führt zu einer weiteren Reduzierung der elektrischen Kopplung zwischen dem Sender 13 und dem Empfänger 15 und damit zu einer weiteren Reduktion der Amplitude $A_{el}$ des zusätzlichen Signals $E_{el}$.

Entsprechend weist eine erfindungsgemäße Vorrichtung einen sehr großen Abstand zwischen der Resonanzfrequenz $f_r$ und der Antiresonanzfrequenz $f_{ar}$ auf. Der Abstand

$$\Delta f = (f_r - f_{ar}) / f_r$$

zwischen der Resonanzfrequenz $f_r$ und der Antiresonanzfrequenz $f_{ar}$ bezogen auf die Resonanzfrequenz $f_r$ beträgt in Luft bis zu 40 %. Die maximale Phasendifferenz $\Delta\Phi$ beträgt in Luft 180°. Beim Eintauchen der Schwingstäbe 7, 9 in einen zähen Schaum oder in ein hochviskoses Medium tritt aufgrund der Eigenschaften des Füllgutes der vorbeschriebene Fall ein, daß sich die maximale Phasendifferenz $\Delta\Phi$ verringert.

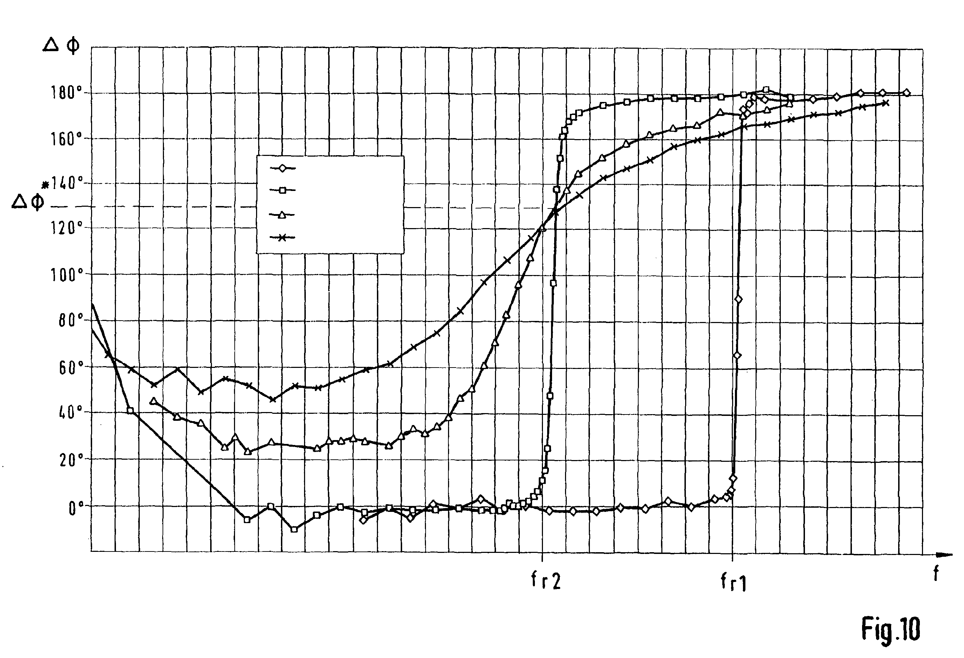

Fig. 10 zeigt den Verlauf der Phasendifferenz $\Delta\Phi$ bei Frequenzen in der Umgebung der Resonanzfrequenz $f_r$ dieser Vorrichtung, wobei sich der mit Rauten markierte Phasenverlauf ergibt, wenn die Vorrichtung in Luft schwingt. Der mit Quadraten markierte Phasenverlauf ergibt sich wenn die Schwingstäbe 7, 9 in Wasser eingetaucht sind, der mit Dreiecken markierte Phasenverlauf ergibt sich wenn die Schwingstäbe 7, 9 in einer Flüssigkeit mit einer Viskosität von 1000 mPas eingetaucht sind und der mit Kreuzen markierte Phasenverlauf ergibt sich wenn die Schwingstäbe 7, 9 in eine Flüssigkeit mit einer Viskosität von 5000 mPas eingetaucht sind. Die Resonanzfrequenz in Luft ist mit $f_{r1}$ bezeichnet und die Resonanzfrequenz in Wasser ist mit $f_r$ bezeichnet.

In den unproblematischen Anwendungen in Luft und in Wasser beträgt die maximale Phasendifferenz 180°. Aufgrund des erfindungsgemäßen Aufbaus der Vorrichtung beträgt die maximale Phasendifferenz in der Flüssigkeit mit einer Viskosität von 1000 mPas noch ca. 160° und in der Flüssigkeit mit einer Viskosität von 5000 mPas noch ca. 120°. Weitere in Fig. 10 nicht dargestellte Messungen bei denen die Schwingstäbe 7, 9 in Schaum eingetaucht waren haben je nach Zähigkeit des Schaums vergleichbar große oder sogar noch größere maximale Phasendifferenzen geliefert. So weist z.B. die maximale Phasendifferenz bei einem zähen Schaums ungefähr den gleichen Wert auf, wie diejenige die in einem Medium mit einer Viskosistät von 5000 mPas wurde.

Es kann also eine einzige sensorspezifische Phasendifferenz $\Delta\Phi_R$ angegeben werden, die zwischen dem Sendesignal S und dem Empfangssignal E einzustellen ist, damit die Vorrichtung in einer großen Bandbreite von Medien von niedriger bis hoher Zähigkeit bzw. niedriger bis hoher Viskosität einwandfrei arbeitet. Vorzugsweise ist diese sensorspezifische Phasendifferenz gleich der Phasendifferenz $\Delta\Phi^*$, die durch den Schnittpunkt der Phasenverläufe in Fig. 10 ausgezeichnet ist. Dieser Schnittpunkt liegt in Fig. 10 etwa 70° unterhalb der Phase, die auftritt, wenn die Vorrichtung frei in Luft schwingt. Bei dieser ausgezeichneten sensorspezifischen Phasendifferenz $\Delta\Phi^*$ ist die Schwingungsfrequenz im eingetauchten Zustand in den verschiedenen Medien identisch.

Es wird vorzugsweise die Phasendifferenz $\Delta\Phi$ zwischen Sendesignal S und Empfangssignal E auf diesem ausgezeichneten sensorspezifischen Wert $\Delta\Phi^*$ gehalten und die Frequenz des Empfangssignals E ausgewertet. Ist die Frequenz f des Empfangssignals E um einen bestimmten prozentualen Anteil $(f_{r1} - f_m)/f_{r1}$ der Resonanzfrequenz $f_{r1}$ in Luft geringer als die Resonanzfrequenz $f_{r1}$ in Luft, so sind die Schwingstäbe 7, 9 mit dem Füllgut bedeckt. Dieser prozentuale Abstand ist nachfolgend als Schaltabstand bezeichnet.

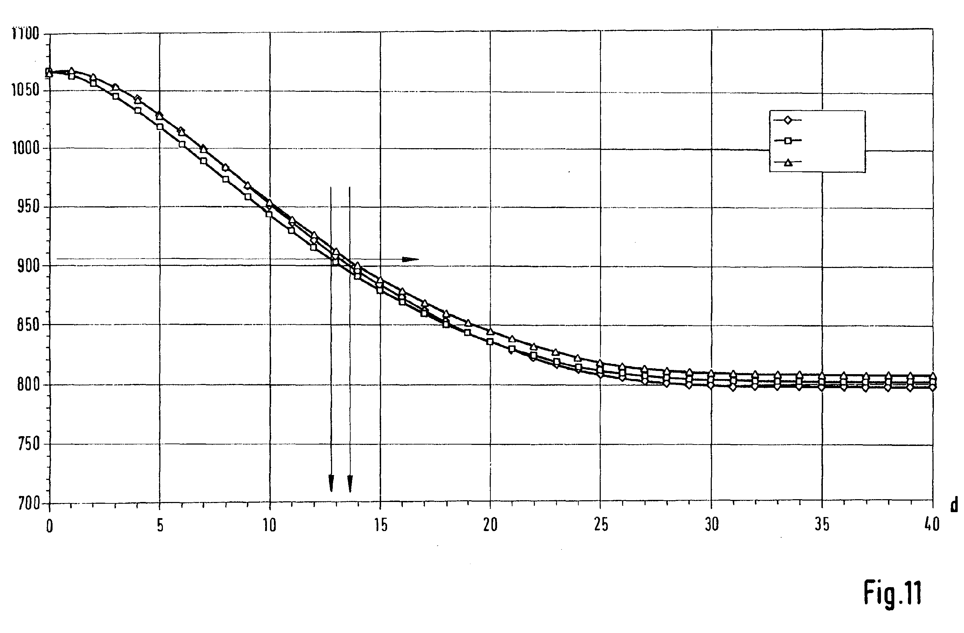

In Fig. 11 sind Messungen dargestellt die die Frequenz f des Empfangssignals E in Abhängigkeit von der Eintauchtiefe d der Schwingstäbe 7, 9 in verschiedene Medien zeigen. Die Frequenz f ist in Hertz, die Eintauchtiefe d in Millimetern dargestellt. Die mit Rauten markierte Kurve wurde durch Eintauchen in Wasser, die mit Quadraten markierte Kurve durch Eintauchen in eine Flüssigkeit mit einer Viskosität von 5000 mPas und die mit Dreiecken markierte Kurve durch Eintauchen in eine Flüssigkeit mit einer Viskosität von 12500 mPas erhalten. Die Messungen zeigen, daß bei einem durch die waagerechte gestrichelte Linie dargestellten Schaltabstand von - 15% die Eintauchtiefen, bei denen der Schaltabstand unterschritten wird, in die drei Medien lediglich um 1 mm verschieden sind.

Die Vorrichtung liefert bei einer sehr großen Bandbreite von Medien praktisch identisch gute Ergebnisse. Der Grund hierfür ist der große prozentuale Abstand zwischen der Resonanzfrequenz $f_r$ und der Antiresonanzfrequenz $f_{ar}$ bezogen auf die Resonanzfrequenz $f_r$. Durch diesen Abstand ist gewährleistet, daß es eine sensorspezifische Phasendifferenz gibt, die beim Eintauchen in die verschiedenen Medien immer erreicht wird. Besonders genau, insofern, als sie beim Eintauchen in verschiedene Medien bei nahezu identischer Eintauchtiefe schaltet, wird die Vorrichtung, wenn diese sensorspezifische Phasendifferenz $\Delta\Phi_R$ gleich der ausgezeichneten Phasendifferenz $\Delta\Phi^*$ ist, bei der sich die Kurven der Phasen des Empfangssignals als Funktion der Frequenz bei in verschiedene Medien eingetauchten Schwingstäben 7, 9 schneiden.

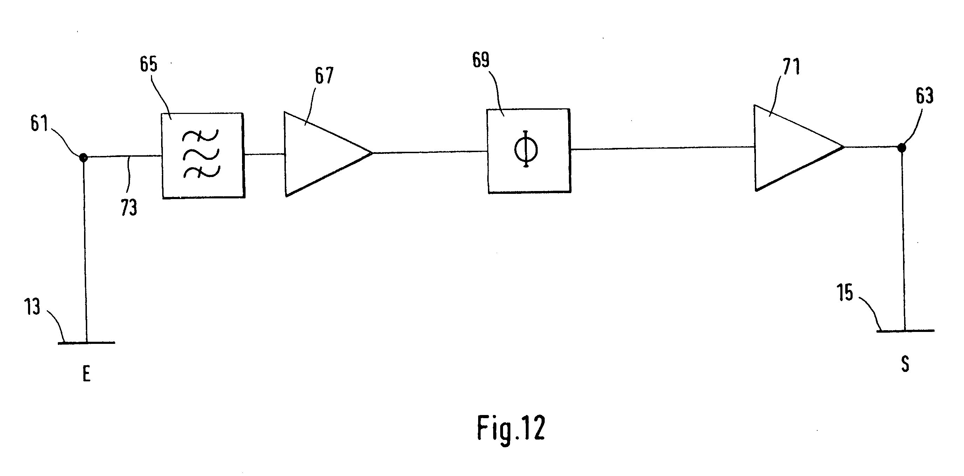

Es ist eine in Fig. 12 dargestellte Rückkopplungsschaltung vorgesehen, die dazu dient, die Vorrichtung in Schwingungen zu versetzen und die zwischen dem Sendesignal S und dem Empfangssignal E die sensorspezifische Phasendifferenz einzustellen.

An einem Eingang 61 der Rückkopplungsschaltung liegt im Betrieb das vom Empfänger 15 aufgenommene Empfangssignal E an und an einem Ausgang 63 derselben steht das Sendesignal S zur Verfügung. Das Sendesignal S ist gleich dem um eine konstante sensorspezifische Phase $\Delta\Phi_r$ verschobenen Empfangssignal E und liegt im Betrieb am Sender 15 an.

Die Rückkopplungsschaltung ist so ausgebildet, daß sie in einem sehr großen Frequenzbereich die gleiche konstante sensorspezifische Phasenverschiebung $\Delta\Phi_r$ liefert. Der Frequenzbereich ist durch die Frequenzen gegeben, die das Empfangssignal E beim Eintauchen in verschiedene Materialien aufweisen kann, wenn zwischen dem Sendesingal S und dem Empfangssignal E die konstante sensorspezifische Phasenverschiebung $\Delta\Phi_r$ besteht. Aufgrund der obigen günstigen Schwingungseigenschaften der erfindungsgemäßen Vorrichtung ist der Anwendungsbereich, in dem die Vorrichtung einsetzbar ist entsprechend groß. Ein und dieselbe Vorrichtung funktioniert in einer großen Bandbreite von Medien angefangen mit Luft bis hin zu hochviskosen Medien und zähen Schäumen einwandfrei, ohne daß Änderungen der Einstellung der Vorrichtung erforderlich sind. Entsprechend groß ist die Bandbreite der möglicherweise auftretenden Frequenzen. Bei den in Fig. 11 dargestellten Messungen lag die Frequenz bei der die Vorrichtung in Luft schwingt bei über 1000 Hz während die Frequenz im bedeckten Zustand noch etwa 800 Hz betrug.

Die Rückkopplungsschaltung umfaßt einen Bandpaßfilter 65, einen dazu in Reihe geschalteten ersten Verstärker 67, einen zu dem ersten Verstärker 67 in Reihe geschalteten Phasenschieber 69 und einen zu dem Phasenschieber 69 in Reihe geschalteten zweiten Verstärker 71. Die Rückkopplungsschaltung ist in ihrer Gesamtheit so dimensioniert, daß das an deren Ausgang 63 abnehmbare Sendesignal S für einen breiten an deren Eingang 61 anliegenden Frequenzbereich von Empfangssignalen E gleich dem um die fest vorgegebene sensorspezifische Phasendifferenz $\Delta\Phi_R$ verschobenen jeweiligen Empfangssignal E ist.

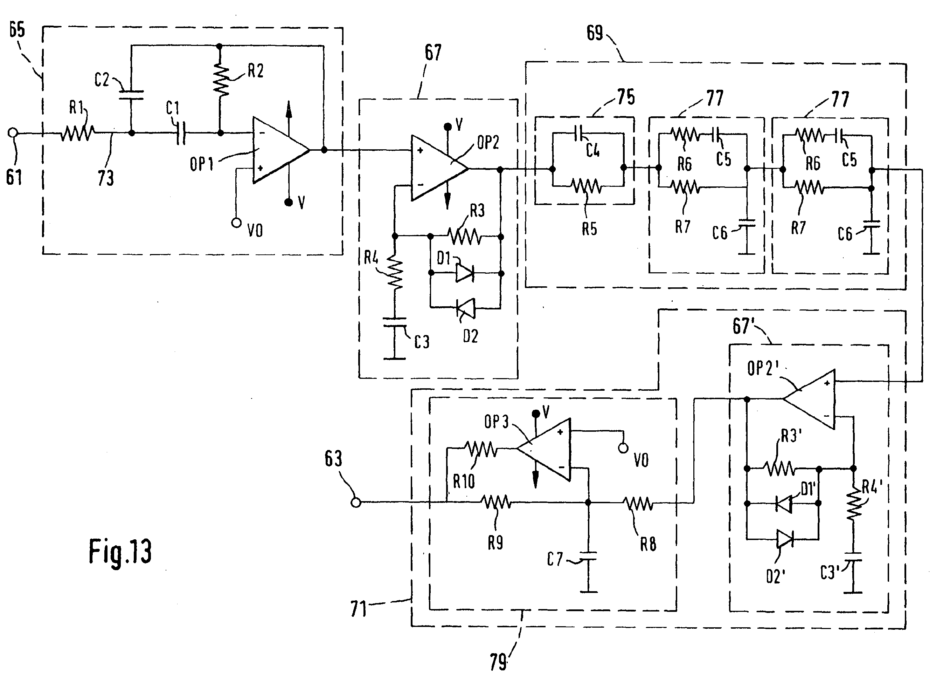

Fig. 13 zeigt ein Ausführungsbeispiel einer solchen Rückkopplungsschaltung.

Der Bandpass 65 weist einen ersten Operationsverstärker OP1 auf. Der Eingang 61 ist über eine Leitung 73 über einen Eingangswiderstand R1 und einen dazu in Reihe geschalteten ersten Kondensator C1 mit einem invertierenden Eingang eines ersten Operationsverstärkers OP1 verbunden. Der erste Operationsverstärker OP1 ist von einer Versorgungsspannung V gespeist. Ein nicht-invertierender Eingang des ersten Operationsverstärkers OP1 ist mit einem Offsetpotential VO, von z.B. der halben Versorgungspannung V, verbunden. Im Rückkopplungszweig des ersten Operationsverstärkers OP1 sind parallel zueinander ein zweiter Widerstand R2 und ein zweiter Kondensator C2 angeordnet, wobei der Rückkopplungszweig über den zweiten Widerstand R2 zwischen dem ersten Kondensator C1 und dem invertierenden Eingang des ersten Operationsverstärkers OP1 und über den zweiten Kondensator C2 zwischen dem Eingangswiderstand R1 und dem ersten Kondensator C1 mit der Leitung 73 verbunden ist.

In Reihe zu dem Bandpaß 65 ist der erste Verstärker 67 angeordnet. Dies ist ein nicht invertierender amplitudenbegrenzter Verstärker, der einen zweiten Operationsverstärker OP2 aufweist. Der Ausgang des ersten Operationsverstärkers OP1 ist mit einem nicht invertierenden Eingang des zweiten Operationsverstärkers OP2 verbunden. Der zweite Operationsverstärker OP2 ist ebenfalls über die Versorgungsspannung V gespeist. Der Ausgang des zweiten Operationsverstärkers OP2 liegt über einen hochohmigen dritten Widerstand R3 an einem invertierenden Eingang des zweiten Opertionsverstärkers OP2 an. Zusätzlich liegt der invertierende Eingang des zweiten Operationsverstärkers OP2 über einen vierten Widerstand R4 und einen dazu in Reihe liegenden dritten Kondensator C3 an Masse. Der vierte Widerstand R4 und der dritte Kondensator C3 bilden eine untere Bandbegrenzung. Oberhalb einer durch diese untere Bandbegrenzung gegebenen Grenzfrequenz ist die Verstärkung des ersten Verstärkers 67 im wesentlichen durch das Verhältnis von dem dritten Widerstand R3 zu dem vierten Widerstand R4 bestimmt. Parallel zu dem dritten Widerstand R3 sind eine erste und eine zweite Diode D1, D2 mit entgegengesetzer Durchlaßrichtung parallel zueinander angeordnet. Die erste und die zweite Diode D1, D2 bewirken, daß die Form eines zu verstärkenden quasi sinusförmigen Signals trotz hoher Verstärkung erhalten bleibt.

An den Verstärker 67 ist der Phasenschieber 69 angeschlossen. Der Phasenschieber 69 ist ein passiver Phasenschieber und besteht aus einer Einkopplung 75 und zwei in Reihe geschalteten identischen die eigentliche Phasenverschiebung bewirkenden Elementen 77. Die Einkopplung 75 besteht aus einem vierten Kondensator C4 und einem dazu parallel geschalteten extrem hochohmigen fünften Widerstand R5. Der fünften Widerstand R5 dient dazu sicherzustellen, daß der Gesamtwiderstand des Phasenschiebers 69 im Gleichstromfall nicht unendlich ist. Die die eigentliche Phasenverschiebung bewirkenden Elemente 77 bestehen jeweils aus einem ersten Zweig, in dem ein sechster Widerstand R6 und ein fünfter Kondensator C5 in Reihe angeordnet sind, und einem parallel zu dem ersten Zweig geschalteten zweiten Zweig, in dem ein siebter Widerstand R7 angeordnet ist, der über einen sechsten Kondensator C6 mit Masse verbunden ist.

Der zweite Verstärker 71, der zu dem Phasenschieber 69 in Reihe angeordnet ist, besteht in dem dargestellten Ausführungsbeispiel aus zwei in Reihe geschalteten Teilschaltungen 67', 79. Die erste der beiden Teilschaltungen 67' ist identisch zu dem ersten Verstärker 67 und ist daher in Fig. 13 mit den gleichen zur Unterscheidung um ein Hochkomma ergänzten Bezugszeichen versehen. Die zweite Teilschaltung 79 weist einen achten widerstand R8 und einen in Reihe dazu geschalteten neunten Widerstand R9 auf. Zwischen dem achten und dem neunten Widerstand R8, R9 besteht ein Abgriff, der zum einen mit einem invertierenden Eingang eines dritten Operationsverstärkers OP3 und zum anderen über einen siebten Kondensator C7 mit Masse verbunden ist. An einem nicht invertierenden Eingang des dritten Operationsverstärkers OP3 liegt die Offsetspannung VO an und der dritte Operationsverstärker OP3 ist von der Versorgungsspannung V gespeist. Der neunte Widerstand R9 ist direkt an den Ausgang 63 der Rückkopplungsschaltung angeschlossen und ein Ausgang des dritten Operationsverstärkers OP3 ist über einen zehnten Widerstand R10 mit dem Ausgangs 63 verbunden.

Der achte Widerstand R8 und der siebte Kondensator C7 bilden einen Tiefpaß, der dazu dient, Störungen aus dem Ultraschallfrequenzbereich herauszufiltern. Die Verstärkung der Teilschaltung 79 bestimmt sich im wesentlichen aus dem Verhältnis des Werts des neunten zu dem achten Widerstand R8, R9.

Die Dimensionierung der Schaltung erfolgt derart, daß die von der Rückkopplungsschaltung erzielte Phasenverschiebung den gewünschten Wert aufweist. Dies erfolgt z.B. durch Berechnung der Schaltung oder durch Simulation der Schaltung. Dabei ist die Phasenverschiebung aller Komponenten der Schaltung zu berücksichtigen, damit am Ende das Ausgangssignal der Rückkopplungsschaltung bezogen auf das Eingangssignal der Rückkopplungsschaltung in dem Frequenzbereich die gewünschte Phasenbeziehung aufweist.

**Patentansprüche**

1. Vorrichtung zur Feststellung und/oder Überwachung eines vorbestimmten Füllstandes in einem Behälter, welche Vorrichtung umfaßt :

   - ein Gehäuse (1),
   - ein in den Behälter ragendes Schwingelement,
   - eine an ihrem Rand fest in das Gehäuse (1) eingespannte Membran (5),

     -- an der das Schwingelesment befestigt ist, und

   - einen elektromechanischen Wandler

     - - zur Anregung der Membran (5) zu Schwingungen in Abhängigkeit von einem an dem Wandler anliegenden Sendesignal (S) und
     - - zum Empfangen und Umwandeln von deren Schwingungen in ein elektrisches Empfangssignal (E),

   - bei welcher Vorrichtung ein prozentualer Abstand zwischen einer Resonanzfrequenz $f_r$ und einer Antiresonanzfrequenz $f_{ar}$ bezogen auf die Resonanzfrequenz $f_r$ 20% übersteigt, wenn das Schwingelement in Luft schwingt
   - wobei der elektromechamische Wandler ein einziges, direkt oder unter Zwischenfügung einer Scheibe (31) auf der Membran (5) angeordnetes homogen polarisiertes, scheibenförmigeskreisförmiges piezoelektrisches Element (11) ist,

     -- auf dem zwei formgleiche Elektroden symmetrisch zu einer Achse (17), welche eine Diagonale der Kreisfläche des piezoelektrischen Elements (11) ist, auf der membran-abgewandten Seite angeordnet sind,

       --- von denen eine ein Sender (13) zum Versetzen der Membran (5) in Schwingungen in Abhängigkeit vom Sendesignal (S) und eine ein Empfänger (15) zum Erzeugen des elektrischen Empfangssignals (E) ist,

   - wobei auf der menbran-zusewandten Seite des piezoelektrischen Elements (11) eine Masseelektrode (19) angeordnet ist, die elektrisch leitend mit einer auf der membran-abgewandten Seite angeordneten Anschlußelektrode (21) verbunden ist,
   - wobei sich das elektrische Empfangssignal (E) aus einem Messsignal $E_M$, welches auf den Schwingungen beruht, und einem durch elektrische Kopplungen bedingten zusätzlichen Signal $E_{cl}$ ergibt,
   - wobei die elektrischen Kopplungen zwischen dem Sender (13) und der Masseelektrode (19), zwischen dem Sender (13) und der Anschlußelektrode (21), zwischen dem Empfänger (15) und der Masseelektrode (19), zwischen dem Empfänger (15) und der Anschlußelektrode (21) und zwischen dem Sender (13) und dem Empfänger (15) bestehen,

- wobei die Antiresonanzfrequenz $f_{ar}$ die Frequenz bezeichnet, bei welcher das Messsignal $E_M$ und das zusätzliche Signal $B_{el}$ die gleiche Amplitude und entgegengesetzte Phasen aufweisen,
- wobei, im Falle der Zwischenfügung einer Scheibe, die Scheibe (31) ein Isolator ist und aus einem Material besteht, welchen eine mechanisch Steifigkeit aufweist, die ungefähr gleich der Steifigkeit des piezoelektrischen Elements (11) ist.

2. Vorrichtung nach Anspruch 1, bei der
   die Scheibe (31) aus Steatit besteht.

3. Vorrichtung nach Anspruch 1, bei der
   die Anschlußelektrode (21) symmetrisch zu der Achse (17) ist.

4. Vorrichtung nach Anspruch 1, bei der im Gehäuse (1) eine flexible Leiterplatte (27) vorgesehen ist, und bei der die Elektroden elektrisch leitend an Adern (29) der flexiblen Leiterplatte (27) angeschlossen sind.

5. Vorrichtung nach Anspruch 4, bei der
   auf der flexiblen Leiterplatte (27) zur Spannungsbegrenzung dienende in Oberflächenmontage aufgelötete Multilayer-Varistoren (28) angeordnet sind.

6. Vorrichtung nach Anspruch 1, bei der

   - das Schwingelement zwei voneinander beabstandet auf der Membran befestigte Schwingstäbe (7, 9) aufweist,

     -- die durch die Schwingungen der Membran in gegensinnige Schwingungen quer zu deren Längsachse versetzt werden, und bei der

   - eine in der Membranebene verlaufende gerade, die Schwingstäbe (7, 9) verbindende Linie senkrecht zu der Achse (17) verläuft, bezüglich derer die Elektroden symmetrisch auf der Membran (5) angeordnet sind.

7. Vorrichtung nach Anspruch 1 und 4, bei der eine Montagehülse (35) in dem Gehäuse (1) angeordnet ist,

   - die eine erste membran-zugewandte Öffnung (37) aufweist,

     -- welche von dem piezoelektrischen Element (11) verschlossen ist, und

   - die eine zweite membran-abgewandte Öffnung (39) aufweist,

     -- durch die die flexible Leiterplatte (27) hindurch geführt ist.

8. Vorrichtung nach Anspruch 7, bei der auf der Montagehülse (35) eine Fixiervorrichtung (41) zur Fixierung der flexiblen Leiterplatte (27) vorgesehen ist.

9. Vorrichtung nach Anspruch 8, bei der auf der membran-abgewandten Seiten von Montagehülse (35) und Fixiervorrichtung (41) in dem Gehäuse (1) ein Stecker (53) angeordnet ist, an den die Adern (29) der flexiblen Leiterplatte (27) elektrisch leitend angeschlossen sind und der Steckkontakte aufweist, über die die Adern (29) kontaktierbar sind.

10. Vorrichtung nach Anspruch 1, bei der eine

    - eine Rückkopplungsschaltung vorgesehen ist,

      -- an deren Eingang (61) im Betrieb ein vom elektromechanischen Wandler aufgenommenes Empfangssignal (E) anliegt,
      -- an deren Ausgang (63) im Betrieb ein Sendesignal (S) zur Verfügung steht,

        --- das gleich dem um eine sensorspezifische Phase ($\Delta\Phi_R$) verschobenen Empfangssignal (E) ist und
        --- das im Betrieb an dem elektromechanischen Wandler anliegt,

- wobei die erzeugte sensorspezifische Phasenverschiebung ($\Delta\Phi_R$) für Eingangssignale (E), deren Frequenzen innerhalb eines Frequenzbereichs liegen nahezu gleich ist, und
- wobei der Frequenzbereich durch die Frequenzen gegeben ist, die die Vorrichtung beim Eintauchen in verschiedene Medien aufweist.

11. Vorrichtung nach Anspruch 10, bei der die sensorspezifische Phasenverschiebung gleich einer Phasendifferenz ist, bei der sich mit der Vorrichtung aufgenommene Kurven schneiden, die den Verlauf einer Phasendifferenz zwischen dem Sendesignal (S) und dem Empfangssignal (E) in Abhängigkeit von der Frequenz des Sendesignals (S) für in verschiedene Medien eingetauchte Schwingelemente zeigen.

## Claims

1. Apparatus for establishing and/or monitoring a predetermined filling level in a container, which apparatus comprises:

   - a housing (1),
   - an oscillating element projecting into the container,
   - a diaphragm (5), which is fixedly clamped into the housing (1) at its edge and

     -- to which the oscillating element is fastened, and

   - an electromechanical transducer

     -- for exciting the diaphragm (5) to produce oscillations in dependence on a transmission signal (S) present at the transducer and
     -- for receiving and converting oscillations thereof into an electrical reception signal (E),

   - in which apparatus a percentage interval between a resonant frequency $f_r$ and an antiresonant frequency $f_{ar}$ relative to the resonant frequency $f_r$ exceeds 20% when the oscillating element oscillates in air,
   - the electromechanical transducer being a single homogeneously polarized, disc-shaped, circular piezoelectric element (11), which is arranged on the diaphragm (5) and

     -- on which two electrodes of identical form are arranged, on the side facing away from the diaphragm, symmetrically with respect to an axis (17) which is a diagonal of the circular area of the piezoelectric element (11),

       --- one of which electrodes is a transmitter (13) for causing the diaphragm (5) to oscillate in dependence on the transmission signal (S) and one of which is a receiver (15) for generating the electrical reception signal (E),

   - an earth electrode (19) being arranged on that side of the piezoelectric element (11) which faces the diaphragm, which earth electrode is electrically conductively connected to a connection electrode (21) arranged on the side facing away from the diaphragm,
   - the electrical reception signal (E) resulting from a measurement signal $E_M$ based on the oscillations and an additional signal $E_{el}$ governed by electrical coupling,
   - the electrical coupling existing between the transmitter (13) and the earth electrode (19), between the transmitter (13) and the connection electrode (21), between the receiver (15) and the earth electrode (19), between the receiver (15) and the connection electrode (21) and between the transmitter (13) and the receiver (15),
   - the antiresonant frequency $f_{ar}$ denoting the frequency at which the measurement signal $E_M$ and the additional signal $E_{el}$ have the same amplitude and opposite phases,
   - in the case of the interposition of a disc, the disc (31) being an insulator and being made of a material having a mechanical stiffness which is approximately equal to the stiffness of the piezoelectric element (11).

2. Apparatus according to Claim 1, in which the disc (31) is made of steatite.

3. Apparatus according to Claim 1, in which the connection electrode (21) is symmetrical with respect to the axis (17).

4. Apparatus according to Claim 1, in which a flexible printed circuit board (27) is provided in the housing (1), and in which the electrodes are electrically conductively connected to cores (29) of the flexible printed circuit board (27).

5. Apparatus according to Claim 4, in which multilayer varistors (28) are arranged on the flexible printed circuit board (27), said varistors serving for voltage limiting and being soldered on by means of surface mounting.

6. Apparatus according to Claim 1, in which

   - the oscillating element has two oscillating bars (7, 9), which are fastened in a manner spaced apart from one another on the diaphragm and

     -- are caused to oscillate, by the oscillations of the diaphragm, in opposite directions transversely with respect to their longitudinal axis, and in which

   - a straight line running in the diaphragm plane and connecting the oscillating bars (7, 9) runs perpendicularly to the axis (17), with regard to which the electrodes are arranged symmetrically on the diaphragm (5).

7. Apparatus according to Claim 1 and 4, in which a mounting sleeve (35) is arranged in the housing (1),

   - which sleeve has a first opening (37), which faces the diaphragm and

     -- is closed off by the piezoelectric element (11), and

   - which sleeve has a second opening (39), which faces away from the diaphragm and

     -- through which the flexible printed circuit board (27) is passed.

8. Apparatus according to Claim 7, in which a fixing apparatus (41) for fixing the flexible printed circuit board (27) is provided on the mounting sleeve (35).

9. Apparatus according to Claim 8, in which a plug (53) is arranged on those sides of the mounting sleeve (35) and fixing apparatus (41) which face away from the diaphragm, in the housing (1), to which plug the cores (29) of the flexible printed circuit board (27) are electrically conductively connected and which plug has plug contacts via which contact can be made with the cores (29).

10. Apparatus according to Claim 1, in which

    - a feedback circuit is provided,

      -- at whose input (61), during operation, a reception signal (E) picked up by the electromechanical transducer is present,
      -- at whose output (63), during operation, a transmission signal (S) is available,

        --- which is equal to the reception signal (E) shifted by a sensor-specific phase ($\Delta\Phi_R$) and
        --- which is applied to the electromechanical transducer during operation,

    - the sensor-specific phase shift ($\Delta\Phi_R$) generated being virtually identical for input signals (E) whose frequencies lie within a frequency range, and
    - the frequency range being given by the frequencies of the apparatus when immersed in various media.

11. Apparatus according to Claim 10, in which the sensor-specific phase shift is equal to a phase difference at which curves picked up with the apparatus intersect, which curves show the profile of a phase difference between the transmission signal (S) and the reception signal (E) as a function of the frequency of the transmission signal (S) for oscillating elements immersed in various media.

**Revendications**

1. Dispositif destiné à la détermination et/ou la surveillance d'un niveau prédéterminé au sein d'un réservoir, lequel dispositif comprend :

- un boîtier (1),
- un élément vibrant s'étendant dans le réservoir,
- une membrane (5) fixée par son bord au boîtier (1),

-- sur laquelle est fixé l'élément vibrant, et

- un convertisseur électromécanique

- destiné à l'excitation de la membrane (5) en vibrations en fonction d'un signal d'émission (S) appliqué au convertisseur et
- - destiné à la réception et la conversion de ses vibrations en un signal de réception électrique (E),

- dispositif pour lequel une distance proportionnelle entre une fréquence de résonance $f_r$ et une fréquence d'antirésonance $f_{ar}$ se rapportant à la fréquence de résonance $f_r$ dépasse 20 % lorsque l'élément vibrant vibre dans l'air,
- le convertisseur électromécanique étant constitué d'un unique élément piézoélectrique (11) circulaire, en forme de disque, polarisé de façon homogène, disposé directement sur la membrane (5) ou moyennant l'insertion d'un disque (31),

-- sur lequel sont disposées, sur le côté opposé à la membrane, deux électrodes de forme identique, de façon symétrique à un axe (17), lequel correspond à une diagonale de la surface circulaire de l'élément piézoélectrique (11),

--- parmi lesquelles l'une est un émetteur (13) destiné à faire entrer la membrane (5) en vibrations en fonction du signal d'émission (S) et l'autre est un récepteur (15) destiné à générer le signal de réception électrique (E),

- une électrode de masse (19) étant disposée sur le côté faisant face à la membrane de l'élément piézoélectrique (11), laquelle est reliée par une liaison conductrice avec l'électrode de raccordement (21) disposée sur le côté opposé à la membrane,
- le signal de réception électrique. (E) découlant d'un signal de mesure $E_M$, lequel repose sur les vibrations, et d'un signal $E_{el}$ supplémentaire dû aux couplages électriques,
- les couplages électriques existant entre l'émetteur (13) et l'électrode de masse (19), entre l'émetteur (13) et l'électrode de raccordement (21), entre le récepteur (15) et l'électrode de masse (19), entre le récepteur (15) et l'électrode de raccordement (21) et entre l'émetteur (13) et le récepteur (15),
- la fréquence d'antirésonance $f_{ar}$ désignant la fréquence, à laquelle le signal de mesure. $E_{el}$ et le signal $E_{el}$ supplémentaire présentent la même amplitude et des phases opposées,
- le disque (31) étant, en cas d'insertion d'un disque, un corps isolant et constitué d'une matière présentant une rigidité mécanique, qui est à peu près égale à la rigidité de l'élément piézoélectrique (11).

2. Dispositif selon la revendication.1, pour lequel
le disque (31) est en stéatite.

3. Dispositif selon la revendication 1, pour lequel
l'électrode de raccordement (21) est symétrique par rapport à l'axe (17).

4. Dispositif selon la revendication 1, pour lequel est prévu dans le boîtier (1) un circuit imprimé souple (27), et pour lequel les électrodes sont raccordées par une liaison conductrice aux conducteurs (29) du circuit imprimé souple (27).

5. Dispositif selon la revendication 4, pour lequel
des varistances multicouches (28), destinées à limiter la tension, sont montées en surface sur le circuit imprimé souple (27).

6. Dispositif selon la revendication 1, pour lequel

- l'élément vibrant présente deux tiges vibrantes (7, 9) espacées l'une par rapport à l'autre et fixées sur la membrane,

-- qui sont amenées en vibrations opposées, perpendiculaires à leur axe longitudinal, par les vibrations de la membrane, et pour lequel

- une ligne reliant les tiges vibrantes (7, 9) décrit une droite dans le plan de la membrane et est perpendiculaire à l'axe (17), par rapport auquel les électrodes sont disposées de façon symétrique à la membrane (5).

7. Dispositif selon la revendication 1 et 4, pour lequel une douille de montage (35) est disposée dans le boîtier (1),

- laquelle douille présente une première ouverture (37) se trouvant sur le côté faisant face à la membrane,

-- laquelle ouverture est obturée par l'élément piézoélectrique (11), et

- laquelle douille présente une deuxième ouverture (39) se trouvant sur le côté opposé à la membrane,

-- ouverture à travers laquelle est introduit le circuit imprimé souple (27).

8. Dispositif selon la revendication 7, pour lequel est prévu, sur la douille de montage (35), un dispositif de fixation (41) destiné à la fixation du circuit imprimé souple (27).

9. Dispositif selon la revendication 8, pour lequel est disposé à l'intérieur du boîtier (1), sur le côté opposé à la membrane de la douille de montage (35) et du dispositif de fixation (41), un connecteur (53), auquel sont connectés par une liaison conductrice les conducteurs (29) du circuit imprimé souple (27), lequel connecteur présente des contacts enfichables, par l'intermédiaire desquels les conducteurs (29) peuvent être mis en contact.

10. Dispositif selon la revendication 1, pour lequel

- est prévu un circuit de réaction

-- à l'entrée (61) duquel est appliqué, en fonctionnement, un signal de réception (E) capté par le convertisseur électromécanique,
-- à la sortie (63) duquel est disponible, en fonctionnement, un signal d'émission (S),

--- qui est égal au signal de réception (E) décalé d'une phase ($\Delta\Phi_R$) spécifique au capteur, et
--- qui est appliqué, en fonctionnement, au convertisseur électromécanique,

- le déphasage ($\Delta\Phi_R$) spécifique au capteur généré étant, pour des signaux d'entrée (E), dont les fréquences sont comprises dans une gamme de fréquences donnée, est à peu près identique, et
- la gamme de fréquences étant définie par les fréquences, que présente le dispositif lors de l'immersion dans différents produits.

11. Dispositif selon la revendication 10, pour lequel le déphasage spécifique au capteur est égal au déphasage, pour lequel des courbes enregistrées à l'aide du dispositif se coupent, courbes qui décrivent l'allure d'un déphasage entre le signal d'émission (S) et le signal de réception (E) en fonction de la fréquence du signal d'émission (S) pour des éléments vibrants immergés dans différents produits.

1

3

5

7    9

Fig.1

Fig.2

Fig.3

Fig.4

Fig.5

Fig.6

Fig.7a

Fig.7b

Fig.8a

Fig.8b

Fig.9a

Fig.9b

Fig.10

Fig.11

EP 0 985 916 B1

Fig.12

Fig.13

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 4419617 A
- EP 97107152 A

- GB 1512233 A
- DE 19523461